# EUROPÄISCHE PATENTSCHRIFT

(11) **EP 0 786 162 B1**
(45) Veröffentlichungstag und Bekanntmachung des Hinweises auf die Patenterteilung: **13.05.1998**
(21) Anmeldenummer: 95934049.8
(22) Anmeldetag: 06.10.1995
(51) Int. Cl.: H01R 35/02, B60R 16/02

(54) **ELEKTRISCHE VERBINDUNGSEINRICHTUNG**
ELECTRICAL CONNECTION ARRANGEMENT
DISPOSITIF DE CONNEXION ELECTRIQUE

(30) Priorität: 10.10.1994 DE 4436172
(43) Veröffentlichungstag der Anmeldung: 30.07.1997
(73) Patentinhaber: EATON CONTROLS GmbH & Co. KG, 55445 Langenlonsheim (DE)
(72) Erfinder: LEUSCHNER, Markus, D-55559 Bretzenheim (DE)
(74) Vertreter: Becker, Bernd, Dipl.-Ing.
(86) Internationale Anmeldenummer: DE9501396
(87) Internationale Veröffentlichungsnummer: WO9611514

(56) Entgegenhaltungen:
- EP-A- 0 195 833
- FR-A- 2 667 457
- GB-A- 2 216 476
- US-A- 4 979 460

## Beschreibung

Die Erfindung bezieht sich auf eine elektrische Verbindungseinrichtung für eine in der Lenkradschüssel eines Kraftfahrzeuges untergebrachte Luftsack-Schutzeinrich-tung, mit einem feststehenden Gehäuseteil und einem dazu um einen begrenzten Winkel verdrehbaren Gehäuseteil, die jeweils eine Anschlußeinheit tragen und einen spiralförmig aufgewickelten, mit seinen Enden mit den Anschlußeinheiten verbundenen flexiblen elektrischen Leiter umschließen, wobei das feststehende Gehäuseteil außenseitig mindestens einen Flansch zur Befestigung an einer Halterung aufweist, und mit einer Anzeigeeinrichtung für die Winkellage der Gehäuseteile zueinander.

Aus der DE 40 14 485 Al ist eine derartige elektrische Verbindungseinrichtung bekannt, bei der das drehbare obere Gehäuseteil mit einer die Richtung und Zahl der Umdrehungen einer Auslenkung des elektrischen Leiters aus der Mittelstellung sichtbar machenden Anzeigeeinrichtung verbunden ist. Hierzu ist auf der Außenseite der Seitenwand des oberen Gehäuseteiles ein umlaufendes Gewinde angebracht. Gleitbeweglich in den Gewindegang des Gewindes greift ein Führungszapfen eines Zeigers ein. Beim Verdrehen des oberen Gehäuseteiles wird der Führungszapfen durch den Gewindegang auf- bzw. abwärts bewegt und mit ihm ein Zeiger, der an einer markierten Scala die Drehrichtung und die Anzahl der Umdrehungen anzeigt. Die Anzeigeeinrichtung ist am feststehenden Gehäuseteil angebracht und ragt über den Durchmesser des drehenden Gehäuseteiles hinaus. Das drehende Gehäuseteil benötigt einen relativ großen Durchmesser, da die Gewindegänge, welche frei zugänglich und daher leicht beschädigbar sind, auf der äußeren Peripherie vorliegen. Das Ablesen der Winkellage der Gehäuseteile zueinander ist nur von der Seite her möglich. Nach dem Einbau der elektrischen Verbindungseinrichtung in die Lenkradschüssel ist die Sicht auf die Anzeigeeinrichtung nicht immer gewährleistet. Die bekannte Anzeigeeinrichtung besitzt zumindest in der einen Drehrichtung keine Drehsperre, wodurch der flexible elektrische Leiter überbeansprucht werden kann.

Weiterhin offenbart die DE 32 04 913 C2 eine elektrische Verbindungseinrichtung mit zwei um einen begrenzten Winkel gegeneinander verdrehbaren, je eine Anschlußeinheit tragenden Gehäuseteilen. Die Gehäuseteile umschließen einen spiralig aufgewickelten, mit seinen Enden mit den Anschlußeinheiten verbundenen flexiblen elektrischen Leiter. Ein erstes Zahnrad mit verhältnismäßig großem Durchmesser ist mit dem einen Gehäuseteil drehfest koaxial zur Drehachse der Verdrehbarkeit der Gehäuseteile gegeneinander verbunden und steht im Eingriff mit einem zweiten Zahnrad mit verhältnismäßig kleinem Durchmesser, das an dem anderen Gehäuseteil drehbar gelagert ist, wobei das erste Zahnrad zumindest eine Lücke zwischen seinen Zähnen und das zweite Zahnrad zumindest einen Zahn mit einer der Lücke entsprechenden Breite aufweist. Je nach dem Verhältnis der Zähnezahlen der beiden Zahnräder und der Anzahl der Lücken zwischen den Zähnen des ersten Zahnrades stößt der breite Zahn des zweiten Zahnrades an einen Zahn des ersten Zahnrades an, wobei er eine oder mehrere Lücken des ersten Zahnrades durchläuft und somit die Verdrehbarkeit der beiden Gehäuseteile gegeneinander um einen vorbestimmten Winkel begrenzt.

Um bei der Montage der Verbindungseinrichtung die neutrale Stellung der Gehäuseteile zueinander, in der sich der elektrische Leiter in der Mittelstellung befindet, überwachen zu können, sind die beiden Zahnräder mit einer Referenzmarkierung versehen, die quer über den Eingriffsbereich der Zahnräder längs einer Linie durch deren Achse verläuft. Bei der Montage der Einzelteile der elektrischen Verbindungseinrichtung muß überprüft werden, ob die Referenzmarkierungen auf den beiden Zahnrädern übereinstimmt. Dies erfordert zum einen einen erhöhten Arbeitsaufwand und zum anderen kann nicht sichergestellt werden, daß bei der Montage eine Falscheinstellung ausgeschlossen ist. Die Einzelteile dieser elektrischen Verbindungseinrichtung sind im Aufbau sehr kompliziert, und die Montage muß exakt zielgerichtet durchgeführt werden. Weiterhin kann bei der fertigmontierten Verbindungseinrichtung anhand der Stellung der Markierungen auf den Zahnrädern nicht auf die Drehrichtung geschlossen werden, in die das drehbare Gehäuseteil gedreht werden muß, um die Neutralposition zu erreichen.

Ferner zeigt die FR-A-2 667 457 eine elektrische Verbindungseinrichtung für zwei relativ zueinander verdrehbare Bauteile, die sich allerdings nicht für eine in der Lenkradschüssel eines Kraftfahrzeuges untergebrachte Luftsack-Schutzeinrichtung eignet. Bei dieser Vorrichtung ist der elektrische Leiter nur über einen Abschnitt spiralförmig aufgewickelt. Zur Darstellung der Winkellage der Bauteile zueinander ist eine Anzeigeeinrichtung mit einer spiralförmigen Bahn vorgesehen, die nicht unmittelbar an einem der Bauteile angeordnet ist.

Der Erfindung liegt die Aufgabe zugrunde, eine elektrische Verbindungseinrichtung der eingangs genannten Art zu schaffen, bei der stets die Winkellage der Gehäuseteile zueinander ersichtlich ist, in die eine Verdrehung bereits erfolgte, wobei in beiden Endstellungen eine Drehbegrenzung vorliegt, ohne daß ein wesentlich größerer Bauraum erforderlich ist, und die zur Anwendung kommenden Bauteile unkompliziert und leicht herstellbar sind.

Diese Aufgabe wird erfindungsgemäß dadurch gelöst, daß
- der elektrische Leiter durchgehend spiralförmig aufgewickelt ist und sich von einer Nabe des einen Gehäuseteils bis zu einer Außenwand des anderen Gehäuseteils erstreckt, und
- eine spiralförmige Bahn unmittelbar an einem der Gehäuseteile angeordnet ist, in die ein an einem Verbindungselement zwischen dem feststehenden Gehäuseteil und dem drehbaren Gehäuseteil befestigter Stift gleitbeweglich eintaucht, wobei
- das Verbindungselement einen Bolzen aufweist, der mit dem nicht die spiralförmige Bahn tragenden Gehäuseteil in Eingriff steht.

Durch diese Maßnahmen ergibt sich eine direkte Verbindung zwischen den beiden Gehäuseteilen, nämlich dem drehbaren Gehäuseteil und dem feststehenden Gehäuseteil mittels des Verbindungselementes. An der Stellung des Verbindungselementes läßt sich auch die Winkellage der beiden Gehäuseteile zueinander ablesen, und zwar ohne Ausbau der elektrischen Verbindungseinrichtung aus der Lenkradschüssel.

Nach einer vorteilhaften Ausgestaltung der Erfindung ist die spiralförmige Bahn rechtwinklig zu Mittenachse der Gehäuseteile und koaxial zu den Gehäuseteilen ausgerichtet. Hierdurch ist eine einfache Herstellbarkeit der Teile, insbesondere des Gehäuseteiles, das die spiralförmige Bahn trägt, gewährleistet, und gleichzeitig wird die Bauform der elektrischen Verbindungseinrichtung in ihrem äußeren Durchmesser nicht größer.

Eine Begrenzung des Drehwinkels vom drehbaren Gehäuseteil zum feststehenden Gehäuseteil wird nach einer vorteilhaften Weiterbildung der Erfindung dadurch erreicht, daß die Enden der spiralförmigen Bahn als Anschlag ausgebildet sind und den Weg des Verbindungselementes begrenzen, indem der Stift des Verbindungselementes am Anschlag der spiralförmigen Bahn zur Anlage kommt. Die Anlage des Stiftes am Anschlag, der gleichzeitig das Ende der spiralförmigen Bahn ist und mit dieser hergestellt wird, stellt sicher, daß der flexible elektrische Leiter nicht überbeansprucht wird bzw. sich nicht im Innern der elektrischen Verbindungseinrichtung verwirrt.

Bevorzugt ist am drehbaren Gehäuseteil ein Ansatz mit einem Langloch vorgesehen, in das der Bolzen des Verbindungselementes gleitbeweglich eintaucht. So ergibt sich ein einfacher Aufbau des drehbaren Gehäuseteiles, wobei durch die Einfachheit der Teile keine komplizierte Montage erforderlich ist. Auch nach der Montage kann durch Inaugenscheinnahme des Bolzens im Langloch die Richtigkeit der Montage überprüft werden.

Um das zwischen den Gehäuseteilen angeordnete Verbindungselement einfach und platzsparend zu gestalten, ist nach einer vorteilhaften Ausführung zwischen dem Ansatz am drehbaren Gehäuseteil und der Oberseite der spiralförmigen Bahn ein Distanzraum vorgesehen, in den das als dreizylindriges Bauteil ausgelegte Verbindungselement eingesetzt ist, wobei ein außenseitiger Zylinder der in die spiralförmige Bahn eingesetzte Stift, der andere außenseitige Zylinder der in das Langloch des Ansatzes eingreifende Bolzen und der mittige Zylinder zwischen dem Bolzen und dem Stift eine koaxiale Distanzscheibe ist, die einen größeren Durchmesser als der Stift und der Bolzen aufweist. Das Verbindungselement ist somit als koaxiales Drehteil auf jedem Drehautomaten kostengünstig herstellbar, wobei die Anforderungen an die Genauigkeit leicht einzuhalten sind.

Ein Schutz vor mechanischer Beschädigung und vor Verschmutzung durch Fremdkörper der spiralförmigen Bahn wird nach einer vorteilhaften Weiterbildung dadurch erreicht, daß der das Langloch tragende, am drehbaren Gehäuseteil vorhandene Ansatz als eine, die spiralförmige Bahn abdeckende Scheibe ausgelegt ist, an der eine Öffnung und ein Fortsatz für die Anschlußeinheit des dehbaren Gehäuseteiles vorgesehen ist.

Damit die Anzahl der Einzelteile so gering wie möglich gehalten wird, ist zweckmäßigerweise eine die spiralförmige Bahn tragende Scheibe als Wand der den elektrischen Leiter aufnehmenden Gehäuseteile ausgebildet. Die Wand des Gehäuseteiles, das den elektrischen Leiter schützt und führt, erhält somit eine Doppelfunktion, was mit der Verringerung der Anzahl der einzelnen Bauteile einhergeht.

Ein besonders einfaches Ablesen der Winkellage der Gehäuseteile zueinander, bei der auch ein Rückschluß auf die Drehrichtung erfolgen kann, der notwendig ist, um die Neutrallage zu erreichen, wird nach einer Weiterbildung der Erfindung dadurch erreicht, daß das Verbindungselement als ein zweihebliges Winkelgebilde ausgelegt ist, in dessen Zentrum sich der Bolzen befindet, der im drehbaren Gehäuseteil drehbeweglich eingesetzt ist, wobei an einem ersten Hebelende der Stift angeformt ist, der in der im feststehenden Gehäuseteil eingeformten spiralförmigen Bahn gleitbeweglich im Eingriff ist, und das zweite Hebelende, das einstückig mit dem ersten Hebelende verbunden ist, als ein Zeiger ausgebildet ist, und wobei die Hebel in den Distanzraum eingesetzt und der Stift und der Bolzen nicht zueinander koaxial ausgerichtet sind. Die Höhe des Hebels nimmt hierbei die Dicke der Distanzscheibe ein. Über die Hebellänge wird das Übersetzungsverhältnis für die Anzeige des Zeigers festgelegt, das somit leicht variierbar ist.

Ein Schutz der spiralförmigen Bahn kann auch dadurch erreicht werden, daß nach einer vorteilhaften Ausgestaltung die spiralförmige Bahn in die der Innenseite eines umlaufenden Flansches am feststehenden Gehäuseteil eingelassen ist.

Um eine einfache Transportsicheurng der elektrischen Verbindungseinrichtung zu erhalten, ist bevorzugt ein Riegel zwischen dem drehbaren Gehäuseteil und dem feststehenden Gehäuseteil vorgesehen, der beim Einbau der elektrischen Verbindungseinrichtung in die Lenkradschüssel durch Mittel der Lenksäule und/oder des Lenkrades selbsttätig gelöst wird. Die Verriegelung erfolgt vorteilhafterweise in der Neutralstellung, wodurch stets eine definierte Einbaulage vorliegt. Bei der Demontage der elektrischen Verbindungseinrichtung ist diese auch in die Neutrallage, die an der Anzeigevorrichtung leicht erkennbar ist, zu bringen. Beim Entfernen der elektrischen Verbindungseinrichtung aus der Lenkradschüssel erfolgt die Verriegelung ebenfalls selbsttätig.

Bevorzugt ist der Riegel als eine am drehbaren Gehäuseteil befestigte, eine Betätigungswölbung aufweisende Blattfeder ausgelegt, die an ihrem freien Ende einen Winkelansatz aufweist, der bei nichtbeaufschlagter Betätigungswölbung in ein Riegelloch am feststehenden Gehäuseteil eintaucht und bei beaufschlagter Betätigungswölbung aus dem Riegelloch herausgeschwenkt wird. Außerdem sind zweckmäßigerweise am drehbaren Gehäuseteil Nocken für das Befestigen der Blattfeder angeformt. Durch diese Maßnahmen ergibt sich eine kostengünstige Herstellung des Riegels, da er als einstückige Blattfeder herstellbar ist, wobei die Befestigung des Riegels am Gehäuseteil über die bei der Herstellung des Gehäuseteils mitangespritzten Nocken erfolgt.

Eine konstruktiv günstige Auslegung der Blattfeder des Riegels erhält man, wenn der federnde Bereich der Blattfeder die Form eines Kreisringabschnittes aufweist. Hierdurch kann die Blattfeder realtiv lang mit großen federnden Bereichen ausgebildet werden, wodurch der Riegel aus dem Riegelloch sicher herausgeschwenkt wird.

Eine flächenmäßig günstigere Blattfeder ergibt sich bevorzugt, wenn der federnde Bereich der Blattfeder als Kreissegment ausgebildet ist. Hierbei ist die Blattfeder in den Bereich des Distanzraumes eingebaut. Um den notwendigen Überhub zu erhalten, ist die Betätigungswölbung außerhalb des umlaufenden Flansches hinaus ausgeprägt, wodurch stets eine ausreichende Auslenkung des Riegels in das Riegelloch bzw. aus dem Riegelloch heraus sichergestellt ist.

Nach einer vorteilhaften Weiterbildung der Erfindung weist die Blattfeder eine ebene Basis, mit der sie mittels Nocken am drehbaren Gehäuseteil befestigt ist, und eine von der Basis abgehende Federspange auf, die die den Winkelansatz und die über die Federspange hinaus geprägte Betätigungswölbung trägt, wobei in die Außenseite des umlaufenden Flansches mindestens ein Riegelloch eingelassen ist, in das bei nichtbeaufschlagter Betätigungswölbung der Winkelansatz des Riegels eintaucht.

Bei einer alternativen Ausgestaltung der Erfindung ist ein starrer Riegel federbelastet gleitbeweglich in eines der Gehäuseteile eingesetzt, und die Mittel der Lenksäule und/oder des Lenkrades wirken zum Lösen des Riegels mit einer Kuppe des Riegels zusammen, wobei beim Beaufschlagen der Kuppe des Riegels ein am Riegel angeordneter Riegelansatz aus dem Riegelloch des anderen Gehäuseteiles heausgeschwenkt wird. Hierdurch wird die Kuppe zwar axial beätigt, jedoch wird sie durch radiale Mittel der Lenksäule und/oder des Lenkrades gehalten, wodurch die großen axialen Toleranzen zwischen Lenkrad und Lenksäule auf das Lösen der Sperre keine Auswirkungen mehr haben. Die Kuppe liegt im betätigten Zustand an dem radialen Abschnitt der Mittel der Lenksäule und/oder des Lenkrades an. Diese Toleranzen sind leicht beherrschbar.

Durch eine überlagerte Bewegung auf der Einleitseite des Bügels wird die große axiale Toleranz zwischen Lenkrad und Lenksäule aufgefangen und auf der Ausgangsseite des Riegels in eine kleine definierte, durch Erfordernisse der elektrischen Verbindungseinrichtung gerecht werdende Ausgangsbewegung umgesetzt. Nach einer vorteilhaften Weiterbildung der Erfindung besteht der Riegel aus einer Platte, die auf einer Breitseite einen Führungsbolzen und dazu benachbart auf einer Schmalseite die Kuppe aufweist, wobei an dem gegenüberliegenden Ende in die Platte ein die Sitzfläche einer Druckfeder bildender Ausschnitt eingelassen ist, und diagonal gegenüber dem Führungsbolzen an einem Fortsatz der Platte auf der anderen Breitseite der Riegelansatz angeordnet ist.

Die Verriegelung der elektrischen Verbindungseinrichtung soll einen einfachen Aufbau besitzen, der mit einer geringen Anzahl von Einzelteilen bewerkstelligbar ist. Dazu ist bevorzugt vorgesehen, daß das drehbare Gehäuseteil einen die Platte des Riegels führenden Schlitz und eine den Schlitz partiell erweiternde, die Druckfeder aufnehmende Auswölbung besitzt, wobei in einer Seitenwand des Schlitzes eine den Führungsbolzen des Riegels aufnehmende, radiusförmige Nutbahn eingelassen ist, deren Ausschwenkende entgegengesetzt der Druckfeder angeordnet ist und den Überstand der Kuppe aus dem Schlitz sowie den Hub des Riegels in Wirkrichtung der Druckfeder begrenzt, und deren Einschwenkende derart in Richtung der Druckfeder verläuft, daß beim Betätigen der Kuppe des Riegels mit den Mitteln der Lenksäule und/oder des Lenkrades der Riegel in Richtung der radiusförmigen Nutbahn in den Schlitz einschwenkt, wobei der am Fortsatz der Platte befindliche Riegelansatz aus dem Riegelloch am feststehenden Gehäuseteil ausschwenkt, und beim Entfernen der Mittel der Riegel unter der Wirkung der Druckfeder aus dem Schlitz herausschwenkt, wodurch der Riegelansatz mit dem Riegelloch zusammenwirkt.

Der Riegel soll die Drehbewegung der beiden Gehäuseteile zueinander unterbinden. Dazu ist es nur erforderlich, daß der Riegelansatz eine axiale Bewegung in Richtung zu dem zu verriegelnden Gehäuseteil zurücklegt. Nach bevorzugter Ausgestaltung der Erfindung ist daher am drehbaren Gehäuseteil ein den Weg des Riegelansatzes in allen Stellungen begrenzender Noppen vorgesehen, an den der Riegelansatz und/oder der Fortsatz unter der Wirkung der Druckfeder zur Anlage kommt.

In der Regel sind die Mittel zum Lösen der Verriegelung an dem Lenkrad vorhanden. Dementsprechend ist somit das drehbare Gehäuseteil dem Lenkrad zugeordnet. Die drehbare Anschlußeinheit ragt in Richtung des Lenkrades vor. Bevorzugt ist daher die Aufnahme für den Riegel an der drehbaren Anschlußeinheit angebracht. Zweckmäßigerweise ist am feststehenden Gehäuseteil eine Riegelscheibe befestigt, die mindestens ein Riegelloch trägt. Die Riegelscheibe kann an die geometrischen Erfordernisse leicht angepaßt werden.

Der der Erfindung zugrundeliegende Gedanke wird in der nachfolgenden Beschreibung anhand mehrerer Ausführungsbeispiele, die in der Zeichnung dargestellt sind, näher erläutert. Es zeigt:
- Fig. 1: eine Seitenansicht auf eine elektrische Verbindungseinrichtung,
- Fig. 2: eine Ansicht auf die elektrische Verbindungseinrichtung gemäß Fig. 1 in Richtung des Pfeiles II,

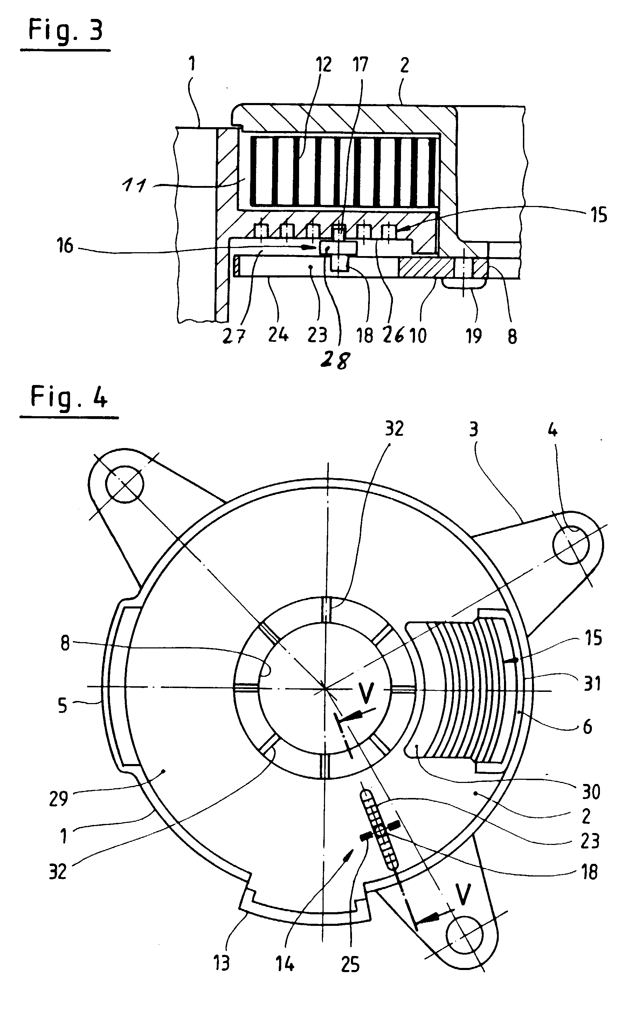

- Fig. 3: einen Teilschnitt gemäß Fig. 2 in Richtung der Pfeile III-III,
- Fig. 4: eine alternative Ausführungsform der elektrischen Verbindungseinrichtung nach Fig. 1 in Richtung des Pfeiles IV.
- Fig. 5: einen Schnitt gemäß Fig. 4 in Richtung der Pfeile V-V,
- Fig. 6: eine alternative Ausführungsform gemäß Fig. 4 mit einer Transporteinrichtung,

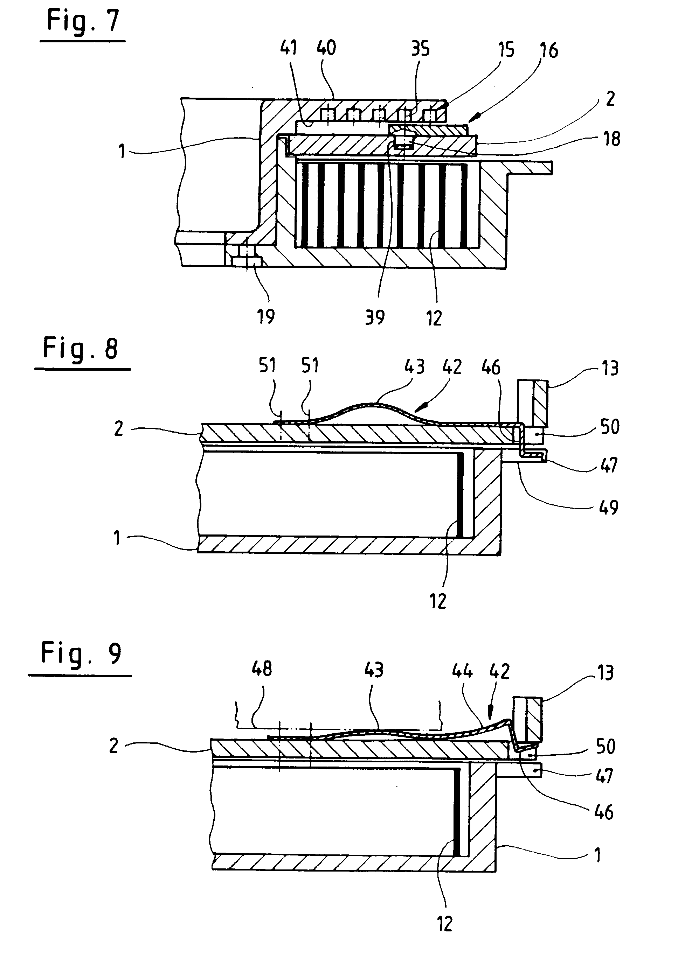

- Fig. 7: einen Teilschnitt durch die Darstellung nach Fig. 6 entlang der Linie VII-VII,
- Fig. 8: einen Teilschnitt durch die Darstellung nach Fig. 6 entlang der Linie VIII-VIII mit verriegelter Transportsicherung,
- Fig. 9: die Ansicht gemäß Fig. 8 mit entriegelter Transportsicherung,
- Fig. 10: eine Alternativausführung der Darstellung nach Fig. 6,
- Fig. 11: einen Teilschnitt durch die Darstellung nach Fig. 10 entlang der Linie XI-XI,
- Fig. 12: eine elektrische Verbindungseinrichtung nach Fig. 1 mit einer alternativen Transportsicherung,
- Fig. 13: eine Ansicht auf die elektrische Verbindungseinrichtung gemäß Fig. 12 in Richtung des Pfeiles XIII,

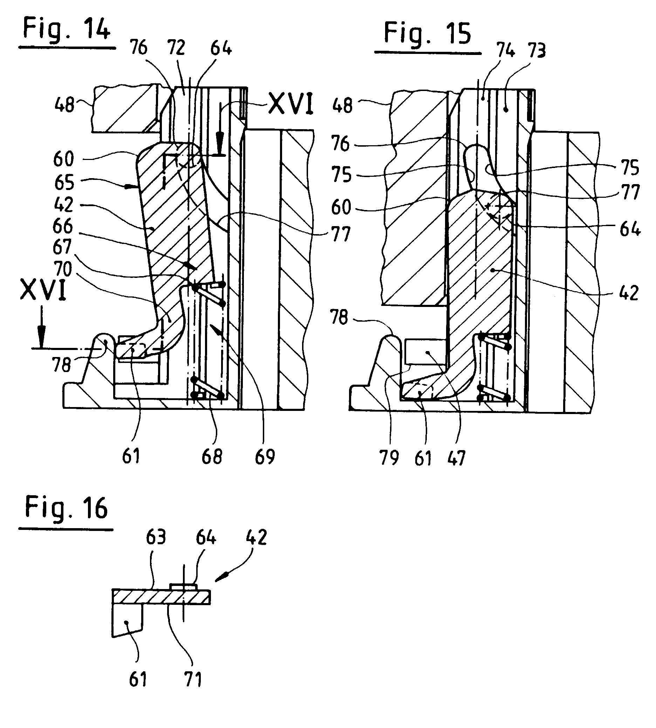

- Fig. 14: einen Teilschnitt durch die elektrische Verbindungseinrichtung gemäß Fig. 12 in Richtung der Pfeile XIV-XIV in verriegeltem Zustand,
- Fig. 15: den Teilschnitt gemäß Fig. 14 in entriegeltem Zustand und
- Fig. 16: einen Schnitt durch den Riegel gemäß Fig. 14 entlang der Linie XVI-XVI.

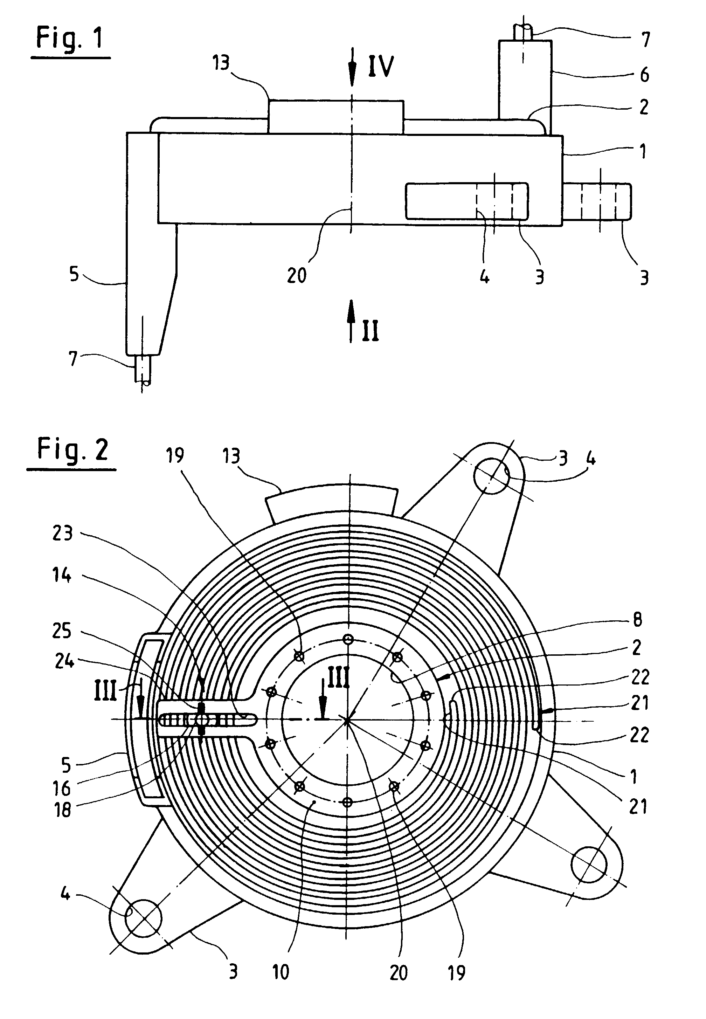

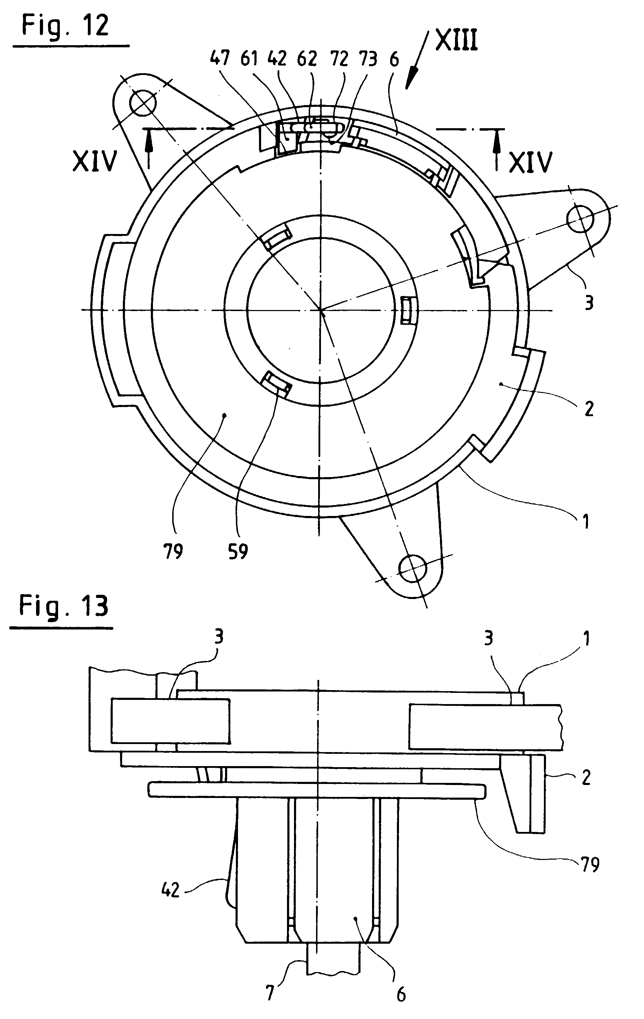

Die elektrische Verbindungseinrichtung weist ein aus Kunststoff bestehendes Gehäuse auf, das aus einem feststehenden Gehäuseteil 1 und einem drehbaren Gehäuseteil 2 zusammengesetzt ist. Am feststehenden Gehäuseteil 1 sind Anschraublaschen 3 mit Anschraublöchern 4 befestigt, über die die elektrische Verbindungseinrichtung in einer nicht dargestellten Lenkradschüssel befestigt wird. Das feststehende Gehäuseteil 1 besitzt eine Anschlußeinheit 5 und das drehbare Gehäuseteil 2 eine Anschlußeinheit 6, über die elektrische Leitungen 7 zum Innern der Verbindungseinrichtung geführt werden. Jede elektrische Verbindungseinrichtung besitzt eine zylindrische Nabe 8, die sowohl im drehbaren Gehäuseteil 2 (Fig. 2) oder auch im feststehenden Gehäuseteil 1 (Fig. 11) vorhanden ist. Über entsprechende Ausklinkungen 9 ist das drehbare Gehäuseteil 2 auf dem feststehenden Gehäuseteil 1 gelagert und mit einer Ringscheibe 10 unverlierbar am feststehenden Gehäuseteil 1 befestigt. Zwischen dem feststehenden Gehäuseteil 1 und dem drehbaren Gehäuseteil 2 wird somit ein ringförmiger Hohlraum 11 begrenzt, in den ein elektrischer Leiter 12 in Windungen aufgewickelt ist. Der Leiter 12 kann in dem Hohlraum 11 in einander entgegengesetzten Richtungen weiter aufgewickelt oder abgewickelt werden. Der elektrische Leiter 12 hat die Form eines flexiblen Bandes aus Kunststoff, in das im seitlichen Abstand voneinander flache, nicht dargestellte Kupferstreifen eingebettet sind. An seinen Enden ist der elektrische Leiter 12 in den Anschlußeinheiten 5 und 6 mit den Leitungen 7 verbunden. Das drehbare Gehäuseteil 2 besitzt weiterhin einen Mitnahmezapfen 13, mit dem die Drehung des Lenkrades auf die elektrische Verbindungseinrichtung übertragen wird.

Gemäß der Fig. 2 trägt das feststehende Gehäuseteil 1 eine spiralförmige Bahn 15 mit insgesamt sechs Windungen. Passend zur Nabe 8 ist die Ringscheibe 10 über Verschweißungen 19 mit dem drehbaren Gehäuseteil 2 verbunden. An der Ringscheibe 10 des drehbaren Gehäuseteiles befindet sich ein Ansatz 24 mit einem Langloch 23. Ein Verbindungselement 16 ist zwischen dem feststehenden Gehäuseteil 1 und dem drehbaren Gehäuseteil 2 vorhanden und zwar derart, daß in die spiralförmige Bahn 15 ein Stift 17 des Verbindungselementes 16 gleitbeweglich eintaucht. Ein ebenfalls am Verbindungselement 16 angeordneter Bolzen 18 gleitet in dem Langloch 23 des Ansatzes 24. Die koaxial zueinander liegenden Gehäuseteile 1 und 2 haben eine gmeinsame Mittenachse 20. Koaxial und rechtwinklig zu dieser Mittenachse 20 ist die spiralförmige Bahn 15 in dem feststehenden Gehäuseteil 1 angeordnet. Die Enden 21 der im feststehenden Gehäuseteil 1 eingeformten spiralförmigen Bahn 15 sind als Anschlag 22 ausgebildet. Sie begrenzen den Weg des Verbindungselementes 16, in dem der Stift 17 des Verbindungselementes 16 am Anschlag 22 in den Enden 21 der spiralförmigen Bahn zur Anlage kommt. Ein weiteres Drehen des drehbaren Gehäuseteiles 2 ist jetzt nicht mehr möglich. Der elektrische Leiter 12 kann also nicht überlastet werden. Der Ansatz 22 mit dem Langloch 23 reicht über die gesamte Breite der spiralförmigen Bahn 15. Somit kann der Bolzen 18 in dem Langloch 23 hin- und hergleiten. Eine Markierung 25 auf dem Ansatz 22 stellt die Neutralstellung dar. Sie liegt dann vor, wenn der Bolzen 18 des Verbindungselementes 16 mit diesem übereinstimmt. Zwischen der Oberseite 26 der spiralförmigen Bahn 15 und dem Ansatz 24 am drehbaren Gehäuseteil 2 befindet sich ein umlaufender Distanzraum 27. Das Verbindungselement 16 ist ein dreizylindrisches Bauteil, das in die spiralförmige Bahn 15 und das Langloch 23 eintaucht und die Höhe des Distanzraumes 27 überbrückt. Ein außenseitiger Zylinder ist der Stift 17, der in die spiralförmige Bahn 15 eingesetzt ist. Der andere außenseitige Zylinder ist der Bolzen 18, der im Langloch 23 des Ansatzes 24 gleitet. Der mittige Zylinder ist eine zwischen dem Bolzen 18 und dem Stift 17 angeordnete koaxiale Distanzscheibe 28, die einen größeren Druchmesser als der Stift 17 und der Bolzen 18 aufweist. Somit wird verhindert, daß der Stift 17 zu tief in die spiralförmige Bahn 15 eintaucht, bzw. daß das Verbindungselement 16 durch das Langloch 23 im Ansatz 24 aus dem Eingriff in der spiralförmigen Bahn 15 herauswandert.

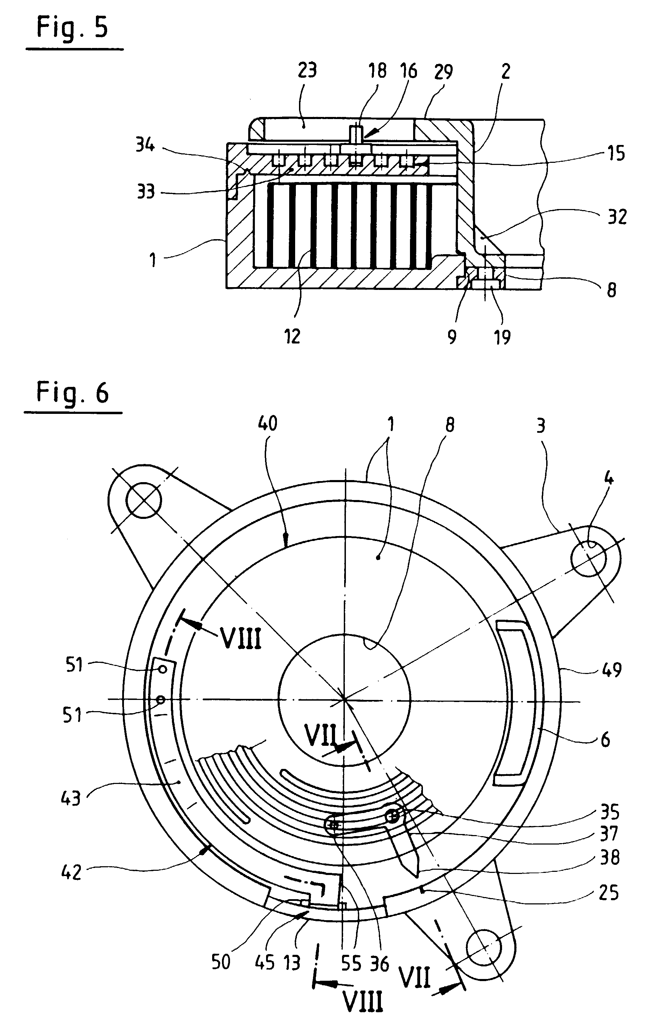

Bei der elektrischen Verbindungseinrichtung gemäß der Fig. 5 sind am drehbaren Gehäuseteil 2 von der Nabe 8 her Stege 32 angeformt, die das drehbare Gehäuseteil 2 versteifen. Der in der Fig. 2 gezeigte Ansatz 24 am drehbaren Gehäuseteil 2 ist hierbei durch eine Scheibe 29 ersetzt. Die Scheibe 29 deckt die spiralförmige Bahn 15 ab und weist eine Anzeigevorrichtung 14 mit dem Langloch 23 und dem Bolzen 18 des Verbindungselementes 16 auf. Die Neutralstellung der Verbindungseinrichtung ist erreicht, wenn die Markierungen 25 auf der Scheibe 29 mit dem Bolzen 6 des Verbindungselementes 16 übereinstimmen. Wie aus Fig. 5 ersichtlich, ist der den elektrischen Leiter 12 aufnehmende Bereich durch das feststehende Gehäuseteil 1 und das drehbare Gehäuseteil 2 begrenzt.

Am feststehenden Gehäuseteil 1 ist über Ultraschallschweisung 34 eine Scheibe befestigt, welche die Wand 33 zum elektrischen Leiter 12 hin bildet. Auf der dem elektrischen Leiter 12 entgegengesetzten Seite trägt die Wand 33 die spiralförmige Bahn 15. Die Wand 33 erfüllt somit zwei Funktionen, und zwar zum einen die Abgrenzung und somit die Führung des elektrischen Leiters 12 und zum anderen die Aufnahme der spiralförmigen Bahn 15.

Bei der elektrischen Verbindungseinrichtung gemäß Fig. 6 ist die spiralförmige Bahn 15 in die Unterseite eines feststehenden Gehäuseteils 1 eingelassen. Sie ist jedoch im Schnitt sichtbar dargestellt, um die Funktionen anschaulicher erklären zu können. Das Verbindungselement 16 zwischen dem feststehenden Gehäuseteil 1 und dem drehbaren Gehäuseteil 2 ist als zweihebliges Winkelgebilde ausgelegt, in dessen Zentrum 35 sich der Bolzen 18 befindet, der in eine Lagerbohrung 39 im drehbaren Gehäuseteil 2 drehbeweglich eingesetzt ist. An einem ersten Hebelende 36 ist der Stift 17 angeformt, der in die spiralförmige Bahn 15 im feststehenden Gehäuseteil 1 gleitbeweglich eingreift. Das zweite Hebelende 37 ist einstückig mit dem Hebelende 36 am Zentrum 35 verbunden und trägt an seinem Ende einen Zeiger 38. Das Verbindungselement 16 wird somit durch die Hebel 36 und 37, den Stift 17 und den Bolzen 18 gebildet. Die Hebel 36 und 37 sind in den Distanzraum 27 eingesetzt und besitzen die Höhe der Distanzscheibe 28. Der Stift 17 und der Bolzen 18 des Verbindungselementes 16 sind hierbei nicht koaxial ausgerichtet. In der Neutralstellung zeigt der Zeiger 38 auf die Markierung 25 am feststehenden Gehäuseteil 1. Wird das drehbare Gehäuseteil 2 so bewegt, daß sich der Stift 17 in die Richtung der Nabe 8 innerhalb der spiralförmigen Bahn 15 bewegt, so bewegt sich der Zeiger 38 im Uhrzeigersinn. Wird das drehbare Gehäuseteil 2 jedoch so bewegt, daß der Stift 17 in der Bahn 15 sich zum äußeren Durchmesser der elektrischen Verbindungseinrichtung bewegt, so bewegt sich der Zeiger 38 entgegengesetzt dem Uhrzeigersinn. Am feststehenden Gehäuseteil 1 befindet sich ein Flansch 40, in dessen Innenseite 41 die spiralförmige Bahn 15 eingelassen ist.

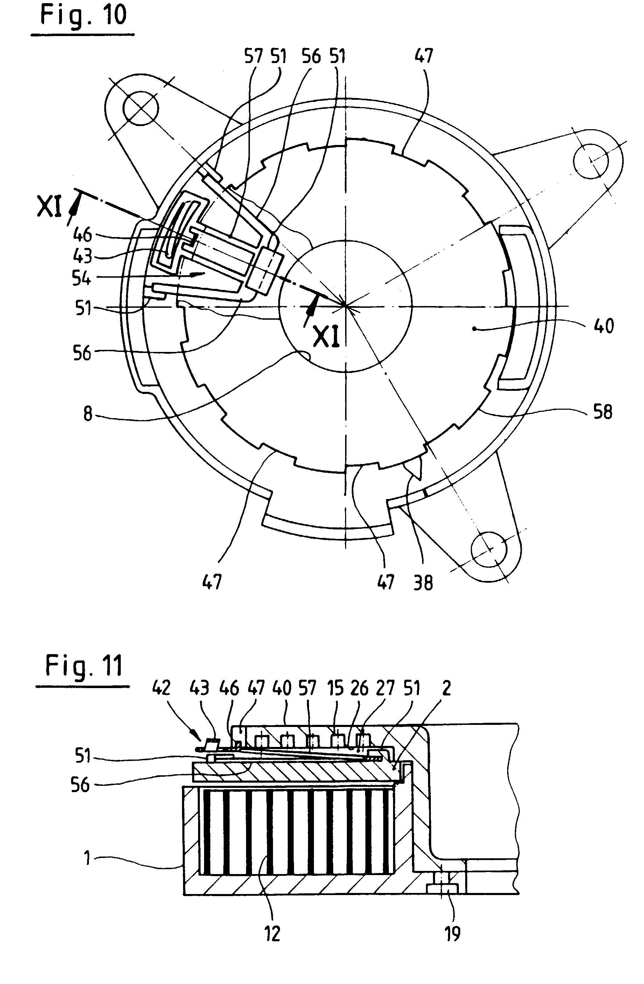

Die elektrischen Verbindungseinrichtungen gemäß den Fig. 6, 10 und 12 besitzen eine Transportsicherung. Die Transportsicherung besteht aus einem Riegel 42, der am drehbaren Gehäuseteil 2 befestigt ist. In den Fig. 6 und 10 weist der Riegel 42 eine Betätigungswölbung 43 auf und ist als Blattfeder 44 ausgelegt. Die Blattfeder 44 hat an ihrem freien Ende 45 einen Winkelansatz 46, der bei nichtbeaufschlagter Betätigungswölbung 43 durch das Lenkrad 48 in ein Riegelloch 47 am feststehenden Gehäuseteil 1 eintaucht. Das Riegelloch 47 ist in einen umlaufenden Rand 49 am feststehenden Gehäuseteil 1 eingelassen. Der Mitnahmezapfen 13 am drehbaren Gehäuseteil 2 besitzt einen Durchlaß 50 für den Winkelansatz 46 des Riegels 42. Bei beaufschlagter Betätigungswölbung 43 durch das Lenkrad 48 schwenkt der Winkelansatz 46 aus dem Riegelloch 47 heraus und kommt im Durchlaß 50 an der Unterseite des Mitnahmezapfens 13 zur Anlage. Am drehbaren Gehäuseteil 2 sind Nocken 51 angeformt, mit denen die als Riegel 42 ausgebildete Blattfeder 44 befestigt wird. In der Fig. 6 ist der federnde Bereich 52 der Blattfeder 44 als ein Kreisringabschnitt ausgelegt. In der Fig. 10 ist der federnde Bereich 53 der Blattfeder 54 als ein Kreissegment ausgebildet. Die Blattfeder 44 hat eine rechtwinklige Abkröpfung 45 zum Winkelansatz 46 hin und taucht somit in den Bereich des umlaufenden Randes 49 am feststehenden Gehäuseteil 1 ein.

Die Transportsicherung gemäß der Fig. 10 besteht aus einer kreissegmentförmigen Blattfeder 54, die teilweise in den Distanzraum 27 vor der Oberseite 26 der spiralförmigen Bahn 15 eingebaut ist. Die Blattfeder 54 besitzt eine ebene Basis 56, mit der sie mittels Nocken 51 am drehbaren Gehäuseteil 2 befestigt ist. Die Blattfeder 54 läßt sich in den Nocken 51, der in der Nähe der Nabe 8 angeordnet ist, einschieben. Mit den beiden Nocken 51 am Außendurchmesser erfolgt ein Verklemmen der Blattfeder 54. Von der ebenen Basis 56 der Blattfeder 54 gehen Federspangen 57 ab, die sowohl den Winkelansatz 46 als auch die über die Federspange 57 hinaus geprägte Betätigungswölbung 43 tragen. Der umlaufende Flansch 40 besitzt auf der Außenseite Riegellöcher 47, in die bei nichtbeaufschlagter Betätigungswölbung 43 der Winkelansatz 46 des Riegels 42 eintaucht. Die Betätigungswölbung 43 liegt hierbei außerhalb der Außenseite 58 des umlaufenden Flansches 40 und kann somit vom Lenkrad 48 betätigt werden.

Bei der elektrischen Verbindungseinrichtung gemäß Fig. 12 ist das feststehende Gehäuseteil 1 über Klipsverbindungen 59 mit dem drehbaren Gehäuseteil 2 verbunden. Ein starrer Riegel 42 ist gleitbeweglich federbelastet in einem Gehäuseteil eingesetzt. Die Kuppe 60 des Riegels 42 schaut aus diesem Gehäuseteil hervor und wird mit Mitteln 48 der Lenksäule und/oder des Lenkrades beaufschlagt. Beim Beaufschlagen der Kuppe 60 schwenkt dabei der am Riegel 42 befindliche Riegelansatz 61 aus dem Riegelloch 47 des anderen Gehäuseteiles heraus.

Der Riegel 42 besteht aus einer Platte 62, die auf einer Breitseite 63 einen Führungsbolzen 64 trägt. Benachbart zum Führungsbolzen 64 besitzt die Platte 62 auf ihrer Schmalseite 65 die Kuppe 60. Am der Kuppe 60 gegenüberliegenden Ende 66 ist die Platte 62, welche im wesentlichen rechteckförmig ausgebildet ist, mit einem Ausschnitt 69 versehen, der die Sitzfläche 67 einer Druckfeder 68 bildet. Diagonal gegenüber einem Führungsbolzen 64 befindet sich an der Platte 62 ein Fortsatz 70. Der Fortsatz 70 weist von der Druckfeder 68 weg und bildet mit der Platte 62 ungefähr einen rechten Winkel. Auf der dem Führungsbolzen 64 gegenüberliegenden Breitseite 71 ist ein Riegelansatz angeformt. In einen Schlitz 72 im drehbaren Gehäuseteil 2 ist der Riegel 42 eingesetzt, wobei der Riegel 42 durch die Platte 62 im Schlitz 72 geführt ist. In dem Schlitz 72 ist unterhalb des Riegels 42 die Druckfeder 68 eingesetzt. Dazu besitzt der Schlitz 72 eine partiell erweiterte, die Druckfeder 68 aufnehmende Auswölbung. In eine Seitenwand 74 des Schlitzes 72 ist eine radiusförmige Nutbahn 75 eingelassen. In dieser Nutbahn 75 gleitet der Führungsbolzen 64 des Riegels 42. Das Ausschwenken 76 der Nutbahn 75 ist entgegengesetzt der Druckfeder 68 angeordnet und begrenzt zum einen den Überstand der Kuppe 60 aus dem Schlitz 72 heraus sowie zum anderen den Hub des Riegels 42 in Wirkrichtung der Druckfeder 68. Das Einschwenkende 77 der Nutbahn 75 verläuft derart in Richtung der Druckfeder 68, daß beim Betätigen der Kuppe 60 des Riegels 42 mit den Mitteln 48 der Lenksäule und/oder des Lenkrades der Riegel 42 in Richtung der radiusförmigen Nutbhan 75 in den Schlitz 72 einschwenkt. Dabei schwenkt der Riegelansatz 61, der sich am Fortsatz 70 der Platte 62 befindet, aus dem Riegelloch 47 am feststehenden Gehäuseteil 1 heraus. Sobald die Mittel 48 der Lenksäule und/oder des Lenkrades entfernt werden, schwenkt der Riegel 42 unter Wirkung der Druckfeder 68 aus dem Schlitz 72 heraus, wodurch der Riegelansatz 61 mit einem Riegelloch 47 zusammenwirken kann und das feststehende Gehäuseteil 1 mit dem drehbaren Gehäuseteil 2 verriegelt. Unter Wirkung der Druckfeder 68 schwenkt der Riegelansatz 61 und der Fortsatz 70 aus dem Schlitz 72 heraus. Das Ausschwenken wird durch einen Noppen 78 begrenzt. An diesem Noppen 78 gleitet der Riegelansatz 61 beim Betätigen der Kuppe 60 entlang und hat somit nur eine translatorische Bewegung.

Am drehbaren Gehäuseteil 2 befindet sich die Anschlußeinheit 6, aus der die elektrische Leitung 7 herausgeführt wird. Die Aufnahme für den Riegel 42 ist an diese Anschlußeinheit 6 angeformt. Eine Riegelscheibe 79 ist am feststehenden Gehäuseteil 1 befestigt, die ein Riegelloch 47 trägt, in das der Riegelansatz 61 des Riegels 42 eingreift.

Somit befindet sich der Riegel 42 zwischen dem drehbaren Gehäuseteil 2 und dem feststehenden Gehäuseteil 1. Der Riegel 42 wird beim Einbau der elektrischen Verbindungseinrichtung in die Lenkradschüssel durch Mittel 48 der Lenksäule und/oder des Lenkrades selbsttätig gelöst. Beim Entfernen der Mittel 48 und beim Übereinstimmen des Winkelansatzes 46 bzw. des Riegelansatzes 61 mit einem Riegelloch 47 erfolgt selbsttätig die Verriegelung der elektrischen Verbindungseinrichtung.

## Patentansprüche

1. Elektrische Verbindungseinrichtung für eine in der Lenkradschüssel eines Kraftfahrzeuges untergebrachte Luftsack-Schutzeinrichtung mit einem feststehenden Gehäuseteil (1) und einem dazu um einen begrenzten Winkel verdrehbaren Gehäuseteil (2), die jeweils eine Anschlußeinheit (5, 6) tragen und einen spiralförmig aufgewickelten, mit seinen Enden mit den Anschlußeinheiten (5,6) verbundenen flexiblen elektrischen Leiter (12) umschließen, wobei das feststehende Gehäuseteil (1) außenseitig mindestens einen Flansch (4) zur Befestigung an einer Halterung aufweist, und mit einer Anzeigeeinrichtung (14) für die Winkellage der Gehäuseteile (1,2) zueinander, dadurch gekennzeichnet, daß
- der elektrische Leiter (12) durchgehend spiralförmig aufgewickelt ist und sich von einer Nabe (8) des einen Gehäuseteils (1 bzw. 2) bis zu einer Außenwand des anderen Gehäuseteils (2 bzw. 1) erstreckt, und
- eine spiralförmige Bahn (15) unmittelbar an einem der Gehäuseteile (1 bzw. 2) angeordnet ist, in die ein an einem Verbindungselement (16) zwischen dem feststehenden Gehäuseteil (1) und dem drehbaren Gehäuseteil (2) befestigter Stift (17) gleitbeweglich eintaucht, wobei
- das Verbindungselement (16) einen Bolzen (18) aufweist, der mit dem nicht die spiralförmige Bahn (15) tragenden Gehäuseteil (1 bzw. 2) in Eingriff steht.

2. Elektrische Verbindungseinrichtung nach Anspruch 1, dadurch gekennzeichnet, daß die spiralförmige Bahn (15) rechtwinklig zur Mittenachse (20) der Gehäuseteile (1, 2) koaxial zu den Gehäuseteile (1, 2) koaxial zu den Gehäuseteilen (1, 2) ausgerichtet ist.

3. Elektrische Verbindungseinrichtung nach Anspruch 1 oder 2, dadurch gekennzeichnet, daß die Enden (21) der spiralförmigen Bahn (15) als Anschlag (22) ausgebildet sind und den Weg des Verbindungselementes (16) begrenzen, indem der Stift (17) des Verbindungselementes (16) am Anschlag (22) der spiralförmigen Bahn (15) zur Anlage kommt.

4. Elektrische Verbindungseinrichtung nach einem der Ansprüche 1 bis 3, dadurch gekennzeichnet, daß am drehbaren Gehäuseteil (2) ein Ansatz (24) mit einem Langloch (23) vorgesehen ist, in das der Bolzen (18) des Verbindungselementes (16) gleitbeweglich eintaucht.

5. Elektrische Verbindungseinrichtung nach einem der Ansprüche 1 bis 4, dadurch gekennzeichnet, daß zwischen dem Ansatz (24) am drehbaren Gehäuseteil (2) und der Oberseite (26) der spiralförmigen Bahn (15) ein Distanzraum (27) vorgesehen ist, in den das als dreizylindriges Bauteil ausgelegte Vrebindungselement (16) eingesetzt ist, wobei ein außenseitiger Zylinder der in die spiralförmige Bahn (15) eingesetzte Stift (17) der andere außenseitige Zylinder der in das Langloch (23) des Ansatzes (24) eingreifende Bolzen (18) und der mittige Zylinder zwischen dem Bolzen (18) und dem Stift (17) eine koaxiale Distanzscheibe (28) ist, die einen größeren Durchmesser als der Stift (17) und der Bolzen (18) aufweist.

6. Elektrische Verbindungseinrichtung nach einem der Ansprüche 1 bis 4, dadurch gekennzeichnet, daß der das Langloch (23) tragende, am drehbaren Gehäuseteil (2) vorhandene Ansatz (24) als eine die spiralförmige Bahn (15) abdeckende Scheibe (29) ausgelegt ist, an der eine Öffnung (30) und ein Fortsatz (31) für die Anschlußeinheit (6) des derehbaren Gehäuseteiles (2) vorgesehen ist.

7. Elektrische Verbindungseinrichtung nach einem der Ansprüche 1 bis 6, dadurch gekennzeichnet, daß eine die spiralförmige Bahn (15) tragende Scheibe als Wand (33) der den elektrischen Leiter (12) aufnehmenden Gehäuseteile (1, 2) ausgebildet ist.

8. Elektrische Verbindungseinrichtung nach einem der Ansprüche 1 bis 4, dadurch gekennzeichnet, daß das Verbindungselement (16) als ein zweihebliges Winkelgebilde ausgelegt ist, in dessen Zentrum (35) sich der Bolzen (18) befindet, der im drehbaren Gehäuseteil (2) drehbeweglich eingesetzt ist, wobei an einem ersten Hebelende (36) der Stift (17) angeformt ist, der in der im feststehenden Gehäuseteil (1) eingeformten spiralförmigen Bahn (15) gleitbeweglich im Eingriff ist, und das zweite Hebelende (37), das einstückig mit dem ersten Hebelende (36) verbunden ist, als ein Zeiger (38) ausgebildet ist, und wobei die Hebel (36, 37) in den Distanzraum (27) eingesetzt und der Stift (17) und der Bolzen (18) nicht zueinander koaxial ausgerichtet sind.

9. Elektrische Verbindungeinrichtung nach einem der Ansprüche 1 bis 6 und 8, dadurch gekennzeichnet, daß die spiralförmige Bahn (15) in die Innenseite (41) eines umlaufenden Flansches (40) am feststehenden Gehäuseteil (1) eingelassen ist.

10. Elektrische Verbindungseinrichtung nach einem der Ansprüche 1 bis 9, dadurch gekennzeichnet, daß ein Riegel (42) zwischen dem drehbaren Gehäuseteil (2) und dem feststehenden Gehäuseteil (1) vorgesehen ist, der beim Einbau der elektrischen Verbindungseinrichtung in die Lenkradschüssel durch Mittel (48) der Lenksäule und/oder des Lenkrades selbsttätig gelöst wird.

11. Elektrische Verbindungseinrichtung nach Anspruch 10, dadurch gekennzeichnet, daß der Riegel (42) als eine am drehbaren Gehäuseteil (2) befestigte, eine Betätigungswölbung (43) aufweisende Blattfeder (44) ausgelegt ist, die an ihrem freien Ende (45) einen Winkelansatz (46) aufweist, der bei nichtbeaufschlagter Betätigungswölbung (43) in ein Riegelloch (47) am feststehenden Gehäuseteil (1) eintaucht und bei beaufschlagter Betätigungswölbung (43) aus dem Riegelloch (47) herausgeschwenkt wird.

12. Elektrische Verbindungseinrichtung nach Anspruch 11, dadurch gekennzeichnet, daß am drehbaren Gehäuseteil (2) Nocken (51) für das Befestigen der Blattfeder (44) angeformt sind.

13. Elektrische Verbindungseinrichtung nach Anspruch 11 oder 12, dadurch gekennzeichnet, daß der federnde Bereich (52) der Blattfeder (44) die Form eines Kreisringabschnittes aufweist.

14. Elektrische Verbindungseinrichtung nach Anspruch 11 oder 12, dadurch gekennzeichnet, daß der federnde Bereich (53) der Blattfeder (54) als Kreissegment ausgebildet ist.

15. Elektrische Verbindungseinrichtung nach Anspruch 14, dadurch gekennzeichnet, daß die teilweise in den Distanzraum (27) vor der Oberseite (26) der spiralförmigen Bahn (15) eingebaute Blattfeder (54) eine ebene Basis (56), mit der sie mittels der Nocken (51) am drehbaren Gehäuseteil (2) befestigt ist, und eine von der Basis (56) abgehende Federspange (57) aufweist, die den Winkelansatz (46) und die über die Federspange (57) hinaus geprägte Batätigungswölbung (43) trägt, wobei in die Außenseite (58) des umlaufenden Flansches (40) mindestens ein Riegelloch (47) eingelassen ist, in das bei nichtbeaufschlager Betätigungswölbung (43) der Winkelansatz (46) des Riegels (42) eintaucht.

16. Elektrische Verbindungseinrichtung nach Anspruch 10, dadurch gekennzeichnet, daß ein starrer Riegel (42) federbelastet gleitbeweglich in eines der Gehäuseteile (1 bzw. 2) eingesetzt ist, und die Mittel (48) der Lenksäule und/oder des Lenkrades zum Lösen des Riegels (42) mit einer Kuppe (60) des Riegels (48) zusammenwirken, wobei beim Beaufschlagen der Kuppe (60) des Riegels (42) ein am Riegel (42) angeordneter Riegelansatz (61) aus dem Riegelloch (47) des anderen Gehäuseteiles (2 bzw. 1) herausgeschwenkt wird.

17. Elektrische Verbindungseinrichtung nach Anspruch 16, dadurch gekennzeichnet, daß der Riegel (42) aus einer Platte (62) besteht, die auf einer Breitseite (63) einen Führungsbolzen (64) und dazu benachbart auf einer Schmalseite (65) die Kuppe (60) aufweist, wobei an dem gegenüberliegenden Ende (66) in die Platte (62) ein die Sitzfläche (67) einer Druckfeder (68) bildender Ausschnitt (69) eingelassen ist, und diagonal gegenüber dem Führungsbolzen (64) an einem Fortsatz (70) der Platte (62) auf der anderen Breitseite (71) der Riegelansatz (61) angeordnet ist.

18. Elektrische Verbindungseinrichtung nach Anspruch 16 oder 17, dadurch gekennzeichnet, daß das drehbare Gehäuseteil (2) einen die Platte (62) des Riegels (42) führenden Schlitz (72) und eine den Schlitz (72) partiel erweiternde, die Druckfeder (68) aufnehmende Auswölbung (73) besitzt, wobei in einer Seitenwand (74) des Schlitzes (72) eine den Führungsbolzen (64) des Riegels (42) aufnehmende, radiusförmige Nutbahn (75) eingelassen ist, deren Ausschwenkende (76) entgegengesetzt der Druckfeder (68) angeordnet ist und den Überstand der Kuppe (60) aus dem Schlitz (72) sowie den Hub des Riegels (42) in Wirkrichtung der Druckfeder (68) begrenzt, und deren Einschwenkende (77) derart in Richtung der Druckfeder (68) verläuft, daß beim Betätigen der Kuppe (60) des Riegels (42) mit den Mitteln (48) der Lenksäule und/oder des Lenkrades der Riegel (42) in Richtung der radiusförmigen Nutbahn (75) in den Schlitz (72) einschwenkt, wobei der am Fortsatz (70) der Platte (62) befindliche Riegelansatz (61) aus dem Riegelloch (47) am feststehenden Gehäuseteil (1) ausschwenkt, und beim Entfernen der Mittel (48) der Riegel (42) unter der Wirkung der Druckfeder (68) aus dem Schlitz (72) herausschwenkt, wodurch der Riegelansatz (61) mit dem Riegelloch (47) zusammenwirkt.

19. Elektrische Verbindungseinrichtung nach einem der Ansprüche 16 bis 18, dadurch gekennzeichnet, daß am drehbaren Gehäuseteil (2) ein den Weg des Riegelansatzes (61) in allen Stellungen begrenzender Noppen (78) vorgesehen it, an den der Riegelansatz (61) und/oder der Fortsatz (70) unter Wirkung der Druckfeder (68) zur Anlage kommt.

20. Elektrische Verbindungseinrichtung nach einem der Ansprüche 16 bis 19, dadurch gekennzeichnet, daß die Aufnahme für den Riegel (42) an der drehbaren Anschlußeinheit (6) angebracht ist.

21. Elektrische Verbindungseinrichtung nach einem der Ansprüche 16 bis 20, dadurch gekennzeichnet, daß am feststehenden Gehäuseteil (1) eine Riegelscheibe (79) befestigt ist, die mindestens ein Riegelloch (47) trägt.

## Claims

1. Electrical connection arrangement for an airbag safety device accommodated in the steering wheel dish of an automotive vehicle, having a stationary housing part (1) and a housing part (2), which is rotatable through a defined angle relative thereto, said parts each carrying a connection unit (5, 6) and surrounding a helically wound, flexible electrical conductor (12), which is connected by its ends to the connection units (5, 6), the stationary housing part (1) having on its outside surface at least one flange (4) for securement on a holder, and having an indicator (14) for indicating the angular position of the housing parts (1, 2) relative to each other, characterised in that
- the electrical conductor (12) is continuously helically wound and extends from a hub (8) of one housing part (1 or 2 respectively) to an external wall of the other housing part (2 or 1 respectively), and
- a helical track (15) is disposed directly on one of the housing parts (1 or 2 respectively), a pin (17) extending slidingly into said track and being secured on a connection element (16) between the stationary housing part (1) and the rotatable housing part (2),
- the connection element (16) having a bolt (18), which engages with the housing part (1 or 2 respectively) which does not carry the helical track (15).

2. Electrical connection arrangement according to claim 1, characterised in that the helical track (15) at right angles to the central axis (20) of the housing parts (1, 2) coaxial relative to the housing parts (1, 2) is aligned coaxially relative to the housing parts (1, 2).

3. Electrical connection arrangement according to claim 1 or 2, characterised in that the ends (21) of the helical track (15) are configured as stop member (22) and define the path of the connection element (16), in that the pin (17) of the connection element (16) comes to abut against the stop member (22) of the helical track (15).

4. Electrical connection arrangement according to one of claims 1 to 3, characterised in that an extension member (24) is provided on the rotatable housing part (2) and has an elongate slot (23), into which the bolt (18) of the connection element (16) slidingly extends.

5. Electrical connection arrangement according to one of claims 1 to 4, characterised in that a clearance area (27) is provided between the extension member (24) on the rotatable housing part (2) and the upper side (26) of the helical track (15), the connection element (16) being designed as a three-cylinder component and being inserted into said clearance area, an external cylinder being the pin (17) inserted into the helical track (15), the other external cylinder being the bolt (18) engaging in the elongate slot (23) of the extension member (24), and the central cylinder between the bolt (18) and the pin (17) being a coaxial spacer disc (28), which has a greater diameter than the pin (17) and the bolt (18).

6. Electrical connection arrangement according to one of claims 1 to 4, characterised in that the extension member (24), which carries the elongate slot (23) and is provided on the rotatable housing part (2), is designed as a disc (29), which covers the helical track (15), an aperture (30) and an extension (31) being provided on said disc for the connection unit (6) of the rotatable housing part (2).

7. Electrical connection arrangement according to one of claims 1 to 6, characterised in that a disc, which carries the helical track (15), is configured as wall (33) of the housing parts (1, 2), which accommodate the electrical conductor (12).

8. Electrical connection arrangement according to one of claims 1 to 4, characterised in that the connection element (16) is designed as a two-levered angular structure, the bolt (18) being situated in the centre (35) of said structure and being rotatably inserted in the rotatable housing part (2), the pin (17) being moulded on a first lever end (36) and engaging slidingly in the helical track (15) provided in the stationary housing part (1), and the second lever end (37), which is integrally connected to the first lever end (36), being configured as a pointer (38), and the lever (36, 37) being inserted into the clearance area (27), and the pin (17) and the bolt (18) not being coaxially aligned with each other.

9. Electrical connection arrangement according to one of claims 1 to 6 and 8, characterised in that the helical track (15) is provided in the inside (41) of an encircling flange (40) on the stationary housing part (1).

10. Electrical connection arrangement according to one of claims 1 to 9, characterised in that a fastening (42) is provided between the rotatable housing part (2) and the stationary housing part (1), said fastening being automatically released by means (48) of the steering column and/or of the steering wheel when the electrical connection arrangement is installed in the steering wheel dish.

11. Electrical connection arrangement according to claim 10, characterised in that the fastening (42) is designed as a leaf spring (44), which is secured on the rotatable housing part (2) and has a control curve (43), said leaf spring having, at its free end (45), an angular extension member (46) which extends into a fastening hole (47) on the stationary housing part (1) when the control curve (43) is not being impinged and is outwardly pivoted from the fastening hole (47) when the control curve (43) is being impinged.

12. Electrical connection arrangement according to claim 11, characterised in that cams (51) for the securement of the leaf spring (44) are moulded on the rotatable housing part (2).

13. Electrical connection arrangement according to claim 11 or 12, characterised in that the resilient region (52) of the leaf spring (44) has the configuration of a circular ring portion.

14. Electrical connection arrangement according to claim 11 or 12, characterised in that the resilient region (53) of the leaf spring (54) is configured as a segment of a circle.

15. Electrical connection arrangement according to claim 14, characterised in that the leaf spring (54), which is partially incorporated in the clearance area (27) before the upper side (26) of the helical track (15), has a flat base (56), to which it is secured by means of the cams (51) on the rotatable housing part (2), and a spring clasp (57), which extends from the base (56) and carries the angular extension member (46) and the control curve (43), which protrudes beyond the spring clasp (57), at least one fastening hole (47) being provided in the outside surface (58) of the encircling flange (40) , and the angular extension member (46) of the fastening (42) extending into said hole when the control curve (43) is not being impinged.

16. Electrical connection arrangement according to claim 10, characterised in that a rigid fastening (42) is inserted into one of the housing parts (1 or 2 respectively) in a spring-loaded, sliding manner, and the means (48) of the steering column and/or of the steering wheel for releasing the fastening (42) co-operate with a rounded top (60) of the fastening (42), a fastening extension member (61) being disposed on the fastening (42) and being outwardly pivoted from the fastening hole (47) of the other housing part (2 or 1 respectively) when the rounded top (60) of the fastening (42) is impinged.

17. Electrical connection arrangement according to claim 16, characterised in that the fastening (42) comprises a plate (62), which has a guide bolt (64) on one broad side (63) and has the rounded top (60) adjacent thereto on a narrow side (65), a cutaway portion (69) being provided in the plate (62) at the oppositely situated end (66) and forming the seating face (67) for a compression spring (68), and the fastening extension member (61) is disposed diagonally opposite the guide bolt (64) on an extension (70) of the plate (62) on the other broad side (71).

18. Electrical connection arrangement according to claim 16 or 17, characterised in that the rotatable housing part (2) has a slot (72), which guides the plate (62) of the fastening (42), and an arched portion (73), which partially widens the slot (72) and accommodates the compression spring (68), a radial groove track (75) being provided in a lateral wall (74) of the slot (72), said track receiving the guide bolt (64) of the fastening (42), the outwardly pivoting end (76) of said track being disposed opposite the compression spring (68) and defining the length of the rounded top (60) projecting from the slot (72) and the movement of the fastening (42) in the operational direction of the compression spring (68), and the inwardly pivoting end (77) of said track extending in the direction of the compression spring (68) in such a manner that, during the actuation of the rounded top (60) of the fastening (42) with the means (48) of the steering column and/or of the steering wheel, the fastening (42) pivots into the slot (72) in the direction of the radius-shaped groove track (75), the fastening extension member (61) which is situated on the extension (70) of the plate (62) pivoting from the fastening hole (47) on the stationary housing part (1) and, for the removal of the means (48), the fastening (42) pivots from the slot (72) by the action of the compression spring (68), whereby the fastening extension member (61) co-operates with the fastening hole (47).

19. Electrical connection arrangement according to one of claims 16 to 18, characterised in that a knub (78) is provided on the rotatable housing part (2), which knub defines the path of the fastening extension member (61) in all of the positions, and the fastening extension member (61) and/or the extension (70) comes to abut against said knub by the action of the compression spring (68).

20. Electrical connection arrangement according to one of claims 16 to 19, characterised in that the receiver for the fastening (42) is attached to the rotatable connection unit (6).

21. Electrical connection arrangement according to one of claims 16 to 20, characterised in that a fastening disc (79) is secured on the stationary housing part (1), which disc carries at least one fastening hole (47).

## Revendications

1. Dispositif de connexion électrique pour un dispositif de protection par coussin d'air logé dans le carter du volant d'un véhicule, avec une portion fixe de boîtier (1) et une portion de boîtier (2) pouvant tourner par rapport à elle d'un angle limité, chacune portant une unité de branchement (5, 6) et renfermant un conducteur électrique souple (12) enroulé en spirale et dont les extrémités sont reliées aux unités de branchement (5, 6), la portion fixe de boîtier (1) présentant extérieurement au moins une bride (4) pour sa fixation à un râtelier, et avec un dispositif indicateur (14) de la position angulaire des portions de boîtier (1, 2) l'une par rapport à l'autre, caractérisé en ce que :
- le conducteur électrique (12) est enroulé en spirale sur toute sa longueur et s'étend depuis un moyeu (8) d'une portion de boîtier (1 ou 2) jusqu'à une paroi externe de l'autre portion de boîtier (2 ou 1), et
- une piste en forme de spirale (15) est disposée directement sur une des portions de boîtier (1 ou 2) dans laquelle une cheville (17) fixée à un élément de liaison (16) entre la portion fixe de boîtier (1) et la portion tournante de boîtier (2) est insérée coulissante,
- l'élément de liaison (16) présentant un boulon (18) qui est en prise avec la portion de boîtier (1 ou 2) qui ne porte pas la piste en forme de spirale (15).

2. Dispositif de connexion électrique selon la revendication 1, caractérisé en ce que la piste en forme de spirale (15) est disposée perpendiculairement à l'axe central (20) des portions de boîtier (1, 2), coaxialement aux portions de boîtier (1, 2).

3. Dispositif de connexion électrique selon la revendication 1 ou 2, caractérisé en ce que les extrémités (21) de la piste en forme de spirale (15) sont agencées en forme de butée et limitent le trajet de l'élément de liaison (16), tandis que la cheville (17) de l'élément de liaison (16) vient se placer contre la butée (22) de la piste en forme de spirale (15).

4. Dispositif de connexion électrique selon l'une des revendications 1 à 3, caractérisé en ce que sur la portion tournante de boîtier (2) est prévu un appendice (24) avec un trou longitudinal (23) dans lequel vient s'insérer coulissant le boulon (18) de l'élément de liaison (16).

5. Dispositif de connexion électrique selon l'une des revendications 1 à 4, caractérisé en ce que, entre l'appendice (24) de la portion tournante de boîtier (2) et la face supérieure (26) de la piste en forme de spirale (15) est prévu un volume d'espacement (27) dans lequel est logé l'élément de liaison (16) sous forme d'un assemblage tricylindrique dans lequel un cylindre du côté extérieur constitue la cheville (17) insérée dans la piste en forme de spirale (15), l'autre cylindre du côté extérieur constitue le boulon (18) accroché dans le trou longitudinal (23) de l'appendice (24) et le cylindre médian situé entre le boulon (18) et la cheville (17) consiste en un disque d'espacement coaxial (28) qui a un diamètre plus grand que le boulon (18) et la cheville (17).

6. Dispositif de connexion électrique selon l'une des revendications 1 à 4, caractérisé en ce que l'appendice (24) portant le trou longitudinal (23) monté sur la portion tournante (2) du boîtier est constitué par un disque (29) recouvrant la piste en forme de spirale (15), dans lequel sont prévus une ouverture et un prolongement (31) pour l'unité de branchement (6) de la portion tournante de boîtier (2).

7. Dispositif de connexion électrique selon l'une des revendications 1 à 6, caractérisé en ce qu'un disque portant la piste en forme de spirale (15) constitue une cloison (33) pour la portion de boîtier (1, 2) recevant le conducteur électrique (12).

8. Dispositif de connexion électrique selon l'une des revendications 1 à 4, caractérisé en ce que l'élément de liaison (15) a la forme d'une pièce angulaire à deux leviers dans le centre de laquelle se trouve le boulon (18), et qui est logée rotative dans la portion tournante de boîtier (2), une première extrémité de levier (36) formant la cheville (17) insérée coulissante dans la piste en forme de spirale (15) pratiquée dans la portion fixe de boîtier (1) et la seconde extrémité de levier (37) qui est réunie en une seule pièce avec la première extrémité de levier (36) constituant une aiguille indicatrice (38), les leviers (36, 37) étant logés dans le volume d'espacement (27) et la cheville (17) et le boulon (18) étant disposés non coaxialement l'un par rapport à l'autre.

9. Dispositif de connexion électrique selon l'une des revendications 1 à 6 et 8, caractérisé en ce que la piste en forme de spirale (15) est agencée sur la face interne (41) d'une collerette périphérique (40) de la portion fixe de boîtier (1).

10. Dispositif de connexion électrique selon l'une des revendications 1 à 9, caractérisé en ce que, entre la portion fixe de boîtier (1) et la portion tournante de boîtier (2) est prévu un verrou qui, lors de l'introduction du dispositif de connexion électrique dans le carter de la colonne de direction est automatiquement libéré par le milieu (48) de la colonne de direction et/ou du volant de direction.

11. Dispositif de connexion électrique selon la revendication 10, caractérisé en ce que le verrou (42) consiste en un ressort à lame (44) fixé à la portion tournante du boîtier (2) et présentant un cintrage de commande (43), ce ressort comportant à son extrémité libre (45) un appendice angulaire (46) qui, quand le cintrage de commandes n'est pas écrasé, s'insère dans un trou de verrouillage (47) de la portion fixe de boîtier (1), et quand le cintrage de commande est écrasé, bascule vers l'extérieur hors du trou de verrouillage (47).

12. Dispositif de connexion électrique selon la revendication 11, caractérisé en ce que, sur la portion tournante de boîtier (2) sont pratiqués des ergots (51) pour la fixation du ressort à lame (44).

13. Dispositif de connexion électrique selon la revendication 11, caractérisé en ce que la zone élastique (52) du ressort à lame (44) a la forme d'une section de couronne annulaire.

14. Dispositif de connexion électrique selon la revendication 11, caractérisé en ce que la zone élastique (53) du ressort à lame (54) a la forme d'un segment circulaire.

15. Dispositif de connexion électrique selon la revendication 14, caractérisé en ce que le ressort à lame (54) logé partiellement dans le volume d'espacement (27) au-dessus de la face supérieure (26) de la piste en forme de spirale (15) présente une base plane (56) par laquelle il est fixé par l'intermédiaire des ergots (51) sur la portion tournante du boîtier (2), et une boucle élastique (57) partant de la base (56), qui porte l'appendice angulaire (46) et le cintrage de commande (43) imprimé vers le haut au-dessus de la boucle élastique (57), la face extérieure (58) de la collerette périphérique (40) comportant au moins un trou de verrouillage (47) dans lequel, quand le cintrage de commande (43) n'est pas écrasé, vient s'insérer l'appendice angulaire (46) du verrou (42).

16. Dispositif de connexion électrique selon la revendication 10, caractérisé en ce qu'un verrou rigide (42) est inséré coulissant sous l'action d'un ressort dans l'une des portions de boîtier (1 ou 2), et le milieu (48) de la colonne de direction et/ou du volant de direction coopère avec une portion arrondie (60) du verrou pour la libération du verrou (42), de manière telle que, quand la portion arrondie (60) du verrou (42) est écrasée, un appendice (61) du verrou (42) bascule vers l'extérieur hors du trou de verrouillage (47) de l'autre portion de boîtier (2 ou 1).

17. Dispositif de connexion électrique selon la revendication 16, caractérisé en ce que le verrou (42) consiste en une plaque (62) qui présente sur un côté large (63) un boulon de guidage (64) et, au voisinage de celui-ci sur un côté étroit (65), la portion arrondie (60), sur l'extrémité opposée (66) étant pratiquée dans la plaque (62) une échancrure (69) constituant une surface d'appui (67) pour un ressort de compression (68) et, diagonalement opposé au boulon de guidage (64) étant agencé sur l'autre côté large (71) l'appendice du verrou (61) sur un prolongement (70) de la plaque (62).

18. Dispositif de connexion électrique selon la revendication 16 ou 17, caractérisé en ce que la portion tournante du boîtier (2) présente une fente (72) de guidage de la plaque (62) du verrou (42) et un cintrage convexe (73) élargissant partiellement la fente (72) et recevant le ressort de compression (68), dans une paroi latérale (74) de la fente (72) étant pratiquée une piste rainurée en forme de rayon (75) recevant le boulon de guidage du verrou, dont une extrémité inclinée vers l'extérieur (76) est agencée à l'encontre du ressort de compression (68), pour limiter le dépassement de la portion arrondie (60) hors de la fente (72) ainsi que la course du verrou (42) en direction d'action du ressort de compression (68), et dont l'extrémité inclinée vers l'intérieur (77) s'étend dans la direction du ressort de compression (68) de manière telle que, par action sur la portion arrondie (60) du verrou (42) exercée par le milieu (48) de la colonne de direction et/ou du volant de direction, le verrou (42) bascule dans la fente (72) dans la direction de la piste rainurée en forme de rayon (75), l'appendice (61) du verrou se trouvant sur le prolongement (70) de la plaque (62) basculant vers l'extérieur hors du trou de verrouillage (47) de la portion fixe du boîtier (1), et, lors de l'éloignement du milieu (48), le verrou (42), sous l'action du ressort de compression (68) bascule vers l'extérieur hors de la fente (72), de sorte que l'appendice (61) du verrou coopère avec le trou de verrouillage (47).

19. Dispositif de connexion électrique selon l'une des revendications 16 à 18, caractérisé en ce que, sur la portion tournante du boîtier (2) est prévu un relief (78) qui limite le trajet de l'appendice (61) du verrou dans toutes les positions, et sur lequel vient buter l'appendice (61) du verrou et/ou le prolongement (70) sous l'action du ressort de compression (68).

20. Dispositif de connexion électrique selon l'une des revendications 16 à 19, caractérisé en ce que le point de réception du verrou (42) est agencé sur l'unité de branchement tournante (6).

21. Dispositif de connexion électrique selon l'une des revendications 16 à 20, caractérisé en ce que, sur la portion fixe (1) du boîtier est fixé un disque de verrouillage (79) qui comporte au moins un trou de verrouillage (47).
